# EUROPÄISCHE PATENTSCHRIFT

(11) **EP 0 528 213 B1**
(45) Veröffentlichungstag und Bekanntmachung des Hinweises auf die Patenterteilung: **19.07.1995**
(21) Anmeldenummer: 92112799.9
(22) Anmeldetag: 27.07.1992
(51) Int. Cl.: E05D 7/12, E05D 5/02

(54) **Beschlagteil zur Klemmbefestigung in einer mindestens einseitigen hinterschnittenen Profilnut**
Fitting to be clamped in a profiled groove with at least one recess
Elément de ferrure fixé par serrage dans une gorge profilée ayant au moins une contre-dépouille

(30) Priorität: 16.08.1991 DE 9110175 U
(43) Veröffentlichungstag der Anmeldung: 24.02.1993
(73) Patentinhaber: FERCO International USINE DE FERRURES DE BATIMENT, F-57400 Sarrebourg (FR)
(72) Erfinder: Vigreux, Daniel, F-57400 Sarrebourg (FR)
(74) Vertreter: Glawe, Delfs, Moll & Partner

(56) Entgegenhaltungen:
- DE-A- 1 559 985
- DE-A- 3 626 451

## Beschreibung

Die Erfindung betrifft ein Beschlagteil von der im Oberbegriff des Anspruchs 1 angegebenen Art. Ein derartiges Beschlagteil ist aus DE-C 36 26 451 bekannt.

Bei dem vorbekannten Beschlagteil ist die Klemmleiste mittels der Schraube, und zwar in der Praxis mittels zweier Schrauben, an dem starren Befestigungsteil gehalten und relativ zu diesem verschiebbar gelagert. Durch Anziehen der Schrauben wird das Beschlagteil in Richtung auf das Befestigungsteil angezogen und dabei durch zusammenwirkende Schrägflächen der Klemmleiste und des Befestigungsteils auch in Querrichtung abgespreizt. Eine oder mehrere Federn sind vorgesehen, um die Klemmleiste vom Befestigungsteil wegzudrücken und dadurch in der zum Befestigungsteil parallelen Einführstellung zu halten.

Das vorbekannte Beschlagteil hat Nachteile bezüglich seiner Handhabung, seiner Belastbarkeit im Einbauzustand, und seiner Herstellung. Falls nur eine Schraube vorgesehen ist, kann sich die Klemmleiste um die Schraube verdrehen und gegenüber dem Befestigungsteil verkanten, was auch durch die vorgesehenen Federn nicht verhindert werden kann. Bei Verwendung von zwei Schrauben ist es aber schwierig, die Klemmleiste so festzuziehen, daß die Klemmkraft gleichmäßig auf beide Schrauben verteilt ist. Auch bei gelösten Schrauben ist es schwierig, die für das Einführen erwünschte exakt parallele Ausrichtung der Klemmleiste zum Befestigungsteil sicherzustellen. Die Übertragung aller Zugkräfte zwischen Befestigungsteil und Beschlagteil erfolgt ausschließlich über die Schraube oder Schrauben; diese werden auf Zug und Biegung belastet, und ebenso wird die Klemmleiste auf Biegung belastet. Für die Unterbringung der für die Prallelausrichtung zusätzlich vorhandenen Federn sind Ausnehmungen in mindestens einer der einander zugewandten Flächen von Befestigungsteil und Klemmleiste erforderlich, wofür ein zusätzlicher Arbeitsgang bei der Herstellung des Beschlagteil erforderlich ist.

Aus DE-U-77 09 379 und DE-B-18 01 913 sind Anordnungen zum Befestigen von Beschlagteilen in hinterschnittenen Nuten bekannt, bei denen ein Befestigungsteil des Beschlages hinter die eine Nuthinterschneidung eingeführt und durch eine gegen die andere Nutwandung anliegende Schraube oder einen Exzenterkopf festgeklemmt wird. Derartige Anordnungen sind nicht sehr stark belastbar und haben den Nachteil, daß die Nut durch die Klemmkraft punktweise belastet wird.

Aus DE-U-74 24 256, DE-U-88 02 678, DE-U-89 03 814, DE-A-39 00 105, DE-A-35 25 717 und US-A-3 018 861 sind verschiedene Ausführungen von Beschlagbefestigungen bekannt, bei denen in der Nut ein beide Nuthinterschneidungen hintergreifendes Füllstück oder ein Nutstein angeordnet ist, der gegen das auf der Nutöffnung aufsitzende Beschlagteil mittels einer oder mehrerer Schrauben angezogen wird. Wenn das Füllstück die Nutbreite im wesentlichen vollständig ausfüllt, kann es nicht durch die verengte Nutöffnung eingeführt werden, sondern muß in Längsrichtung der Nut eingeschoben werden, was umständlich und bei an der Innenseite eines Rahmens umlaufenden Nuten unmöglich ist. Ist die Breite des Füllstücks so gering, daß es durch die Nutöffnung eingeführt werden kann, dann ist bei der Befestigung große Sorgfalt erforderlich, damit das Füllstück beide Nuthinterschneidungen gleichmäß hintergreift. Derartige Beschlagbefestigungen sind in der Anwendung nicht ausreichend sicher.

Aus US-A-4 907 388 ist eine Gestellkonstruktion bekannt, deren Träger an den Stützen mittels in hinterschnittenen Nuten der Stützen eingreifende Klemmen befestigt werden. Jede Klemme ist innerhalb des Hohlprofils eines Trägers angeordnet und hat zwei unverlierbar schwenkbar aneinander gelagerte Schenkel, deren Enden die Hinterschneidungen zweier benachbarter Nuten der Stütze hintergreifen, und die durch eine parallel zum Nutboden in den einen Schenkel eingeschraubte Schraube auseinander gespreizt werden. Diese Konstruktion ist zur Verwendung bei Fenster- oder Türbeschlägen nicht geeignet, da sie nicht sehr stark belastbar ist, weil die Schenkel der Klammer durch die Klemmkraft auf Biegung beansprucht werden.

Der Erfindung liegt die Aufgabe zugrunde, ein Beschlagteil der angegebenen Art so auszubilden, daß seine Bestandteile einfach herzustellen und ohne zusätzliche Bearbeitungsschritte zusammensetzbar sind, und daß unter Verwendung einer einzigen Schraube eine einfache und sichere Handhabung beim Montieren und eine allen auftretenden Belastungen in Längs- und Querrichtung der Nut standhaltende Klemmbefestigung erzielt wird.

Zur Lösung der Aufgabe ist erfindungsgemäß ein Beschlagteil mit den im Anspruch 1 angegebenen Merkmalen vorgesehen. Die Unteransprüche beziehen sich auf weitere vorteilhafte Ausgestaltungen der Erfindung.

Die von der Schraube unabhängige Schwenklagerung der Klemmleiste am Befestigungsteil sorgt einerseits für eine formschlüssige Parallelstellung dieser Teile bereits vor und während der Montage und bewirkt außerdem im Einbauzustand die direkte Übertragung aller senkrecht zur Schwenkachse wirkenden Kräfte von der Klemmleiste auf das Befestigungsteil, so daß die Schraube von diesen Kräften entlastet ist und nur die eigentliche Klemmkraft für das Abspreizen der Klemmleiste aufzubringen hat.

Ausführungsformen der Erfindung werden anhand der Zeichnungen näher erläutert. Es zeigt :
Fig. 1 eine geschnittene, vereinfachte, perspektivische Darstellung eines in einer Profilnut befestigten Beschlagteils gemäß einer ersten Ausführungsform der Erfindung;
Fig. 2 das Beschlagteil gemäß Fig. 1 in der Stellung beim Einführen in die Profilnut im Schnitt;
Fig. 3 eine zweite Ausführungsform des erfindungsgemäßen Beschlagteils in der Einbaustellung.

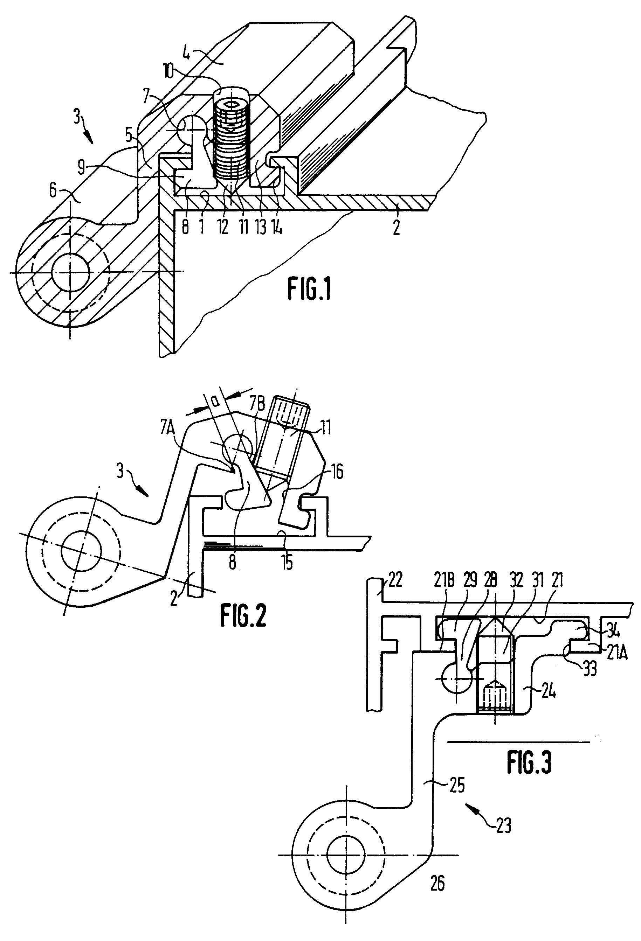

Wie aus der Fig. 1 zu ersehen ist, ist bei der vorliegenden Ausführungsform das in einer T-förmigen Profilnut 1 z.B. eines Fensterrahmens 2 befestigte Beschlagteil 3 ein Scharnierband, das mit einem starren Befestigungsteil 4 versehen ist, der über einen Steg 5 einstückig mit dem Lagerteil 6 des Bandes verbunden ist. Der Befestigungsteil 4 hat an seiner, der Profilnut 1 zugewandten Seite eine Lagernut 7, die einen im wesentlichen kreisförmigen Querschnitt aufweist und die zur Profilnut 1 hin offen ist, wobei die von den Rändern 7A,7B begrenzte Breite a der Lagernutöffnung kleiner als der Durchmesser der Lagernut 7 ist. In dieser Lagernut 7 ist eine Klemmleiste 8 unverlierbar schwenkbar aufgenommen, die mit einer der Lagernut 7 entsprechend geformten kreisförmigen Verdickung versehen ist, an die sich ein hakenförmiger Abschnitt mit einem seitlich abstehenden Steg 9 anschließt. Die Klemmleiste 8 ist um eine in Längsrichtung des Beschlagteils 3 und parallel zur Profilnut 1 des Rahmens 2 sich erstreckende Schwenkachse drehbar, wobei der Schwenkwinkel durch die Ränder 7A,7B der Lagernut und damit durch die Breite a der Lagernutöffnung begrenzt ist. In dem Befestigungsteil 4 ist weiterhin eine Gewindebohrung 10 vorgesehen, in welcher eine Stiftschraube 11 mit kegelförmiger Spitze 12 einschraubbar ist. Das starre Befestigungsteil 4 hat weiterhin an seiner der Lagernut 7 gegenüberliegenden Seite eine in die Profilnut 1 vorspringende Widerlagerleiste 13 mit einem seitlich vorstehenden Steg 14, der die Nuthinterschneidung hintergreift.

Im folgenden wird die Funktionsweise der Klemmbefestigung des vorstehend beschriebenen Beschlagteils 3 in der Profilnut 1 anhand der Fig. 2 beschrieben. Für die Montage des Beschlagteils 3 in der Profilnut 1 wird die Schraube 11 nur so tief eingeschraubt, daß die Klemmleiste 8 am Rand 7B der Nutöffnung der Lagernut 7 anliegen kann. Der Befestigungsteil 4 mit der an dem Rand 7B anliegenden Klemmleiste 8 wird dann schrägstehend mit seinem Steg 14 in die Hinterschneidung an der einen Seite der Profilnut 1 eingesetzt, wobei die am Rand 7B anliegende Klemmleiste 8 mit ihrem Steg 9 innerhalb der Öffnung der Profilnut 1 liegt, so daß das Beschlagteil 3 anschließend in seine in der Fig. 1 gezeigte Position geschwenkt werden kann, in der der Schenkel 5 an der Außenseite des Rahmens 1 anliegt. Zur Befestigung des Beschlagteils 3 in der Profilnut 1 wird nun die Schraube 11 eingeschraubt, bis ihre Spitze 12 am Nutboden 15 der Profilnut 1 anstößt. Durch das Anziehen der Schraube 11 wird die Klemmleiste 8 mit ihrem Steg 9 in die andere Hinterschneidung der Profilnut 1 geschwenkt und durch die senkrecht zur Schrägfläche der Klemmleiste 8 und senkrecht zur Schraubenachse wirkenden Komponenten der in Schraubrichtung wirkenden Schraubkraft erfolgt eine Klemmung zwischen dem Steg 5 an der Rahmenaußenseite und der Klemmleiste 8 an der Innenseite der Profilnut. Dabei wird die Schraube 11 mit den hierfür auftretenden Klemmkräften nicht belastet, da die Schraube 11 an ihrer von der Klemmleiste 8 abgewandten Seite an der Fläche 16 des Befestigungsteils 4 vollständig abgestützt wird. Die Schraubkraft der Schraube 11 führt weiterhin zu einer Spreizklemmung des Befestigungsteils 4 mittels der Stege 9 und 14 und der Hinterschneidungen der Profilnut 1. Mit dem erfindungsgemäßen Beschlagteil 3 kann somit mittels nur einer einzigen Schraube 11 auf einfache Art und Weise eine zweifache Klemmbefestigung der Beschlagteils 3 und der Profilnut erfolgen, wodurch die Sicherung der Befestigung erhöht ist.

Durch die Anpressung der Spitze 12 der Schraube an den Nutboden 15 wird eine zusätzliche Festlegung des Beschlagteils 3 gegen Verschiebungskräfte in Längsrichtung der Profilnut 1 erreicht.

Ein weiterer Vorteil des erfindungsgemäßen Beschlagteils ist die einfache Herstellung, da sowohl das Beschlagteil 3 als auch die Klemmleiste 8 als einfache Strangpreßteile aus Aluminium hergestellt werden können, wodurch Gußwerkzeuge mit komplizierten Hinterschneidungen vermieden werden. Die Montage der Klemmleiste 8 in der Lagernut 7 kann durch einfaches Einschieben erfolgen.

Die Fig. 3 zeigt eine weitere Ausführungsform des erfindungsgemäßen Beschlagteils 23, das in einer hinterschnittenen Profilnut 21 eines Flügelrahmens 22 befestigt ist. Das Beschlagteil 23 besteht ebenfalls aus einem starren Befestigungsteil 24, der über einen Steg 25 einstückig mit einem Scharnierteil 26 verbunden ist. Der Befestigungsteil 24 ist wie bei der vorstehend beschriebenen Ausführungsform mit einer unverlierbaren und schwenkbaren Klemmleiste 28 und einer Stiftschraube 31 versehen. Der Beschlagteil 23 wird ähnlich wie der Beschlagteil 3, in der Profilnut 21 montiert, wobei zunächst bei gelöster Schraube 31 und einwärts geschwenkter Klemmleiste 28 der Widerlagersteg 34 unter die eine Hinterschneidungsrippe 21A der Nut 21 geschoben und dann durch Anziehen der Schraube 31 die Klemmleiste 28 nach außen geschwenkt und ihr Steg 29 unter die andere Hinterschneidungsrippe 21B der Nut gebracht wird. Die Klemmung infolge der senkrecht zur Schrägfläche der Klemmleiste 28 und senkrecht zur Schraubenachse wirkenden Kräfte erfolgt bei dieser Ausführungsform zwischen der gegen die Hinterschneidungsrippe 21B der Profilnut 21 anliegende Klemmleiste 28 und einer Anschlagfläche 33, wobei diese am Befestigungsteil 24 ausgebildet ist und gegen die Innenfläche der Hinterschneidungsrippe 21A gepreßt wird. Durch die Schraube 31, die ebenfalls mit ihrer Spitze 32 gegen den Boden der Profilnut 21 drückt, erfolgt weiterhin die Spreizklemmung der Stege 29 und 34 in der Profilnut 21.

Auch bei dieser Ausführungsform ist somit nur mit einer einzigen Schraube eine zweifache Klemmbefestigung des Beschlagteils 23 in der Profilnut 21 möglich, ohne daß die Schraube 31 zusätzlich belastet wird. Weiterhin besteht auch dieser Beschlag 23 aus einfachen Strangpreßprofilen aus z.B. Alumimium. Bei dieser Ausführungsform erfolgt die wackelfreie Klemmung ausschließlich innerhalb der Profilnut 21, ohne Zusammenwirken zusätzlicher Anlageflächen des Beschlagteils und des Rahmenprofils, wie dies bei der Ausführungsform nach Fig. 1 zwischen dem Steg 5 und der Rahmenaußenfläche der Fall ist.

## Patentansprüche

1. Beschlagteil eines Fenster oder Türbeschlages zur Klemmbefestigung in einer mindestens einseitig hinterschnittenen Profilnut eines Fenster oder Türrahmens, wobei das Beschlagteil einen auf die Nutöffnung aufsetzbaren und teilweise in die Nut einführbaren starren Befestigungsteil und eine an diesem unverlierbar beweglich gelagerte Klemmleiste mit seitlich abstehendem Steg zum Untergreifen der Nuthinterschneidung aufweist, und wobei die Klemmleiste durch Anziehen einer am Beschlagteil gelagerten Schraube aus einer Einführstellung, in der sie in die Nutöffnung einführbar ist, in eine Klemmstellung, in der der Steg die Nuthinterschneidung untergreift, abspreizbar ist, dadurch **gekennzeichnet,** daß die Klemmleiste (8) am Befestigungsteil (4) um eine zur Nutlängsrichtung parallele Schwenkachse schwenkbar gelagert ist und daß die Schraube (11) in einer Gewindebohrung (10) des Befestigungsteils (4) gelagert und durch Einschrauben in Richtung zum Nutboden (15) gegen eine Schrägfläche der Klemmleiste (8) andrückbar ist, um die Klemmleiste (8) um ihre Schwenkachse in die Klemmstellung zu schwenken.

2. Beschlagteil nach Anspruch 1 , dadurch **gekennzeichnet,** daß die Schraube (11) eine dem Nutboden (15) zugewandte Spitze (12) aufweist und bis zum Auftreffen der Spitze (12) auf den Nutboden (15) einschraubbar ist.

3. Beschlagteil nach Anspruch 1 oder 2 , dadurch **gekennzeichnet,** daß die Klemmleiste (8) eine im Querschnitt kreisförmige Verdickung aufweist und mit dieser in einer im Querschnitt kreisförmigen Lagernut (7) des Befestigungsteils (4) schwenkbar gelagert ist.

4. Beschlagteil nach Anspruch 3 , dadurch **gekennzeichnet,** daß die Breite (a) der Nutöffnung der Lagernut (7) kleiner als der Durchmesser der Verdickung ist, und daß die Verdickung der Klemmleiste (8) in Längsrichtung in die an mindestens einem Ende des Befestigungsteils offene Lagernut (7) eingeschoben ist.

5. Beschlagteil nach Anspruch 3 oder 4 , dadurch **gekennzeichnet,** daß die Ränder (7A, 7B) der Öffnung der Lagernut (7) den Schwenkbereich der Klemmleiste (8) festlegen.

6. Beschlagteil nach einem der Ansprüche 1 bis 5 , dadurch **gekennzeichnet,** daß das starre Befestigungsteil (4) eine in die Profilnut (1) vorspringende Widerlagerleiste (13) aufweist, die in Querrichtung der Nut (1) als Widerlager gegen den Nutöffnungsrand, der nicht mit der Klemmleiste (8) zusammenwirkt, anliegt.

7. Beschlagteil nach einem der Ansprüche 1 bis 5, zur Klemmbefestigung an einer beidseitig hinterschnittenen Profilnut, dadurch **gekennzeichnet,** daß der starre Befestigungsteil eine in die Nut vorspringende Widerlagerleiste (13) aufweist, die einen seitlich vorspringenden Steg (14) trägt, der die Nuthinterschneidung auf der von der Klemmleiste (8) abgewandten Nutseite untergreift.

8. Beschlagteil nach einem der Ansprüche 1 bis 6 , dadurch **gekennzeichnet,** daß die Schraube (11) auf ihrer von der Klemmleiste (8) abgewandten Seite durch eine Führungsfläche (16) des starren Befestigungsteils (4) im wesentlichen über ihre volle Länge abgestützt ist.

## Claims

1. A fixture part of a window or door fixture for clamp fastening in a profile groove of a window or door frame undercut on at least one side, wherein the fixture part has a rigid fastening member which can be fitted on the groove opening and which can be inserted partly into the groove, and has a clamping strip which is mounted movably but captive on said fastening meter and which has a laterally protruding web for engaging under the groove undercut, and wherein by tightening a screw mounted on the fixture part the clamping strip can be braced out of an insertion position, in which it can be inserted into the groove opening, into a clamping position, in which the web engages under the groove undercut, characterised in that the clamping strip (8) is pivotably mounted on the fastening member (4) about a pivot axis parallel to the longitudinal direction of the groove, and in that the screw (11) is mounted in a threaded bore (10) of the fastening member (4) and can be pressed against an inclined surface of the clamping strip (8) by being screwed in towards the groove bottom (15) so as to pivot the clamping strip (8) about its pivot axis into the clamping position.

2. A fixture part according to Claim 1, characterised in that the screw (11) has a tip (12) facing the groove bottom (15) and can be screwed in until the tip (12) encounters the groove bottom (15).

3. A fixture part according to Claim 1 or 2, characterised in that the clamping strip (8) has a thickened portion of circular cross-section and is pivotably mounted therewith in a mounting slot (7) of circular cross-section in the fastening member (4).

4. A fixture part according to Claim 3, characterised in that the width (a) of the groove opening of the mounting slot (7) is smaller than the diameter of the thickened portion, and in that the thickened portion of the clamping strip (8) is inserted in longitudinal direction into the mounting slot (7) open at least at one end of the fastening member.

5. A fixture part according to Claim 3 or 4, characterised in that the edges (7A, 7B) of the opening in the mounting slot (7) define the pivot range of the clamping strip (8).

6. A fixture part according to any one of Claims 1 to 5, characterised in that the rigid fastening member (4) has an abutment strip (13) which projects into the profile groove (1) and which in the transverse direction of the groove is applied as an abutment against the groove opening edge which does not co-operate with the clamping strip (8).

7. A fixture part according to any one of Claims 1 to 5, for clamp fastening on a profile groove undercut on both sides, characterised in that the rigid fastening member has an abutment strip (13) which projects into the groove and which has a laterally protruding web (14) which engages under the groove undercut on the side of the groove remote from the clamping strip (8).

8. A fixture part according to any one of Claims 1 to 6, characterised in that on its side remote from the clamping strip (8) the screw (11) is supported substantially over its entire length by a guide surface (16) of the rigid fastening member (4).

## Revendications

1. Elément de ferrure d'une ferrure de fenêtre ou de porte, destiné à la fixation par serrage dans une gorge profilée, à contre-dépouille au moins d'un côté, d'un châssis de fenêtre ou de porte, l'élément de ferrure présentant un élément de fixation rigide pouvant être placé sur l'ouverture de la gorge et être engagé partiellement dans la gorge et une tringle de serrage, montée de manière mobile et imperdable sur ce dernier, à languette latéralement en saillie destinée à venir en prise sous la contre-dépouille de la gorge, la tringle de serrage pouvant être écartée, par le serrage d'une vis montée dans l'élément de ferrure, d'une position d'insertion, dans laquelle elle peut être engagée dans l'ouverture de gorge, en une position de serrage, dans laquelle la languette vient en prise sous la contre-dépouille de la gorge, caractérisé en ce que la tringle de serrage (8) est montée sur l'élément de fixation (4), de manière pivotable autour d'un axe de pivotement parallèle au sens longitudinal de la gorge, et que la vis (11) est montée dans un alésage taraudé (10) de l'élément de fixation (4) et peut être pressée, par vissage en direction du fond de gorge (15), contre une face oblique de la tringle de serrage (8), afin de faire pivoter la tringle de serrage (8), sur son axe de pivotement, en position de serrage.

2. Elément de ferrure suivant la revendication 1, caractérisé en ce que la vis (11) présente une pointe (12) orientée vers le fond de gorge (15) et peut être vissée jusqu'à ce que la pointe (12) heurte le fond de gorge (15).

3. Elément de ferrure suivant la revendication 1 ou 2, caractérisé en ce que la tringle de serrage (8) présente un renflement à section circulaire et est montée, par celui-ci, dans une rainure de palier (7) à section circulaire de l'élément de fixation (4).

4. Elément de ferrure suivant la revendication 3, caractérisé en ce que la largeur (a) de l'ouverture de rainure de la rainure de palier (7) est plus petite que le diamètre du renflement et que le renflement de la tringle de serrage (8) est inséré par glissement, dans le sens longitudinal, dans la rainure de palier (7) ouverte au moins à une extrémité de l'élément de fixation.

5. Elément de ferrure suivant la revendication 3 ou 4, caractérisé en ce que les bords (7A, 7B) de l'ouverture de la rainure de palier (7) déterminent la plage de pivotement de la tringle de serrage (8).

6. Elément de ferrure suivant l'une des revendications 1 à 5, caractérisé en ce que l'élément de fixation rigide (4) présente une tringle de butée (13), faisant saillie dans la gorge du profilé (1), qui s'appuie, dans le sens transversal de la gorge (1), comme butée sur le bord de l'ouverture de gorge qui ne coopère pas avec la tringle de serrage (8).

7. Elément de ferrure suivant l'une des revendications 1 à 5, destiné à être fixé par serrage dans une gorge profilée à contre-dépouille des deux côtés, caractérisé en ce que l'élément de fixation rigide présente une tringle de butée (13), faisant saillie dans la gorge, qui porte une languette (14) latéralement en saillie qui vient en prise sous la contre-dépouille de la gorge du côté de la gorge opposé à la tringle de serrage (8).

8. Elément de ferrure suivant l'une des revendications 1 à 6, caractérisé en ce que la vis (11) est supportée, de son côté opposé à la tringle de serrage (8), sensiblement sur toute sa longueur par une face de guidage (16) de l'élément de fixation rigide (4).
